# EUROPÄISCHE PATENTSCHRIFT

(11) **EP 0 585 683 B1**
(45) Veröffentlichungstag und Bekanntmachung des Hinweises auf die Patenterteilung: **29.10.1997**
(21) Anmeldenummer: 93112934.0
(22) Anmeldetag: 12.08.1993
(51) Int. Cl.: C08F 10/00, C08F 4/22, C08F 4/02, B01J 29/04

(54) **Phillips-Katalysator zur Polymerisation von alpha-Olefinen**
Phillips catalyst for the polymerisation of alpha-olefins
Catalyseur Phillips pour la polymérisation d'alpha-oléfines

(30) Priorität: 29.08.1992 DE 4228883
(43) Veröffentlichungstag der Anmeldung: 09.03.1994
(73) Patentinhaber: BASF Aktiengesellschaft, 67063 Ludwigshafen (DE)
(72) Erfinder: Mueller, Hans-Joachim, Dr., D-6718 Gruenstadt (DE); Braun, Hans-Georg, Dr., D-6718 Gruenstadt (DE); Marczinke, Bernd Lothar, Dr., D-6720 Speyer (DE); Mueller, Ulrich, Dr., D-6730 Neustadt (DE)

(56) Entgegenhaltungen:
- EP-A- 0 055 864
- EP-A- 0 103 117
- EP-A- 0 457 236
- US-A- 2 945 015

## Beschreibung

Die vorliegende Erfindung betrifft einen Phillips-Katalysator zur Polymerisation von α-Olefinen, enthaltend als katalytisch wirksame Komponente mindestens eine Chrom(III)-Verbindung auf einem Silicium-Aluminiumphosphatträger der allgemeinen Formel (I),

(SiₓAl_{y}P_{z})O₂, (I)

wobei
x für Werte von 0,05 bis 0,5
y für Werte von 0,1 bis 1,0 und
z für Werte von 0,1 bis 1,0 steht.

Weiterhin betrifft die vorliegende Erfindung ein Verfahren zur Herstellung eines derartigen Katalysators, sowie ein Verfahren zur Herstellung von Polymerisaten von α-Olefinen.

Geträgerte Chromverbindungen fungieren als katalytisch wirksame Komponente der Phillips-Katalysatoren, wie sie bekanntermaßen für die Copolymerisation von Ethylen und α-Olefinen nach dem Suspensionspolymerisationsverfahren angewendet werden. Neben Silicagel und Aluminiumphosphat werden auch Aluminiumoxid-Siliciumoxid-Cogele oder Aluminiumsilikat-Gele als Träger in den Chromkatalysatoren angewandt (vgl. die US-A 2 825 721 oder die US-A 2 930 789). Bei der Herstellung der Chromkatalysatoren können außer Chrom noch Phosphorverbindungen auf die feinteiligen Aluminiumsilikat-Gele aufgetragen werden. Üblicherweise werden hierfür Phosphorsäure (vgl. die US-A 2 945 015) oder phosphororganische Verbindungen wie Alkylphosphate (vgl. die DE-A 25 02 940) angewandt. Diese Phosphorverbindungen können unter den bei der Herstellung der Katalysatorvorstufen angewandten Bedingungen mit dem üblicherweise verwendeten Chromtrioxid zu chrom- und phosphorhaltigen Verbindungen reagieren, welche letztendlich auf die Aluminiumsilikat-Gele aufgetragen werden.

Daneben sind Phillips-Katalysatoren bekannt, welche feinteilige, Silikat-geträgerte, phosphorhaltige Chromkatalysatoren enthalten, bei deren Herstellung das likatgel oder die phosphor- und chromhaltige Katalysatorvorstufe mit aluminiumorganischen Verbindungen behandelt werden (vgl. die DE-A 28 20 860 oder die DE-A 26 10 422). Die betreffenden Phillips-Katalysatoren liefern zwar Polymerisate mit hohen Schmelzindices, indes läßt ihre Produktivität noch stark zu wünschen übrig.

Weiterhin werden in der EP-A 075 421 Chrom-Katalysatoren zur Polymerisation von Ethylen beschrieben, die auf strukturell eindeutig definierten Zeolithen geträgert sind. Trägermaterialien mit einer definierten Struktur haben gegenüber Materialien ohne definierte Struktur den Vorteil, daß sich mit ihnen Struktur-Wirkungsprinzipien von Polymerisationskatalysatoren gut verfolgen lassen. Üblicherweise sind solche strukturell definierten Träger als Polymerisationskatalysatoren nur bedingt geeignet, da ihre Produktivitäten unbefriedigend sind. Dies wird vor allem darauf zurückgeführt, daß derartige Trägermaterialien eine hohe Festigkeit aufweisen, die das sonst bei Ziegler- und Phillips-Katalysatoren übliche Fragmentieren des Trägers verhindert.

Aufgabe der vorliegenden Erfindung war es, einen neuen Phillips-Katalysator zu entwickeln, der eine eindeutig definierte Struktur aufweist und sich insbesondere auch durch eine gegenüber dem Stand der Technik erhöhte Produktivität auszeichnet.

Demgemäß wurde der eingangs definierte Phillips-Katalysator zur Polymerisation von α-Olefinen entwickelt, enthaltend als katalytisch wirksame Komponente mindestens eine Chrom(III)-Verbindung auf einem Silicium-Aluminiumphosphatträger der allgemeinen Formel (I)

(SiₓAl_{y}P_{z})O₂, (I)

wobei
x für Werte von 0,05 bis 0,5
y für Werte von 0,1 bis 1,0 und
z für Werte von 0,1 bis 1,0 steht.

Als Silicium-Aluminiumphosphatträger für den erfindungsgemäßen Phillips-Katalysator wird insbesondere ein solcher Träger der allgemeinen Formel (I) eingesetzt, bei dem x für Werte von 0,08 bis 0,4, y für Werte von 0,2 bis 0,8 und z für Werte von 0,1 bis 0,8 steht. Ein besonders bevorzugter Träger der allgemeinen Formel (I) enthält Silicium, Aluminium, Phosphor und Sauerstoff dabei in solchen Mengenverhältnissen, daß x für Werte von 0,1 bis 0,2, y für Werte von 0,3 bis 0,5 und z für Werte von 0,2 bis 0,6 steht. Die Herstellung derartiger Silicium-Aluminiumphosphatträger ist u.a. aus der US-A 4 440 871 bekannt.

Üblicherweise werden in dem erfindungsgemäßen Phillips-Katalysator solche Silicium-Aluminiumphosphatträger verwendet, welche ein Porenvolumen von 0,1 bis 1,0 cm³/g, insbesondere von 0,2 bis 0,8 cm³/g und eine äquivalente spezifische Oberfläche von 150 bis 800 m²/g, insbesondere von 250 bis 500 m²/g aufweisen.

Weiterhin enthält der erfindungsgemäße Phillips-Katalysator mindestens eine Chrom(III)-Verbindung, üblicherweise wasserlösliche Salze des dreiwertigen Chroms oder Chrom(III)-Chelatkomplexe. Beispiele gut geeigneter wasserlöslicher Salze des dreiwertigen Chroms sind u.a. Chrom(III)-nitrat und -acetat, von denen Chrom(III)-nitrat ganz besonders vorteilhaft ist und für die Herstellung der Phillips-Katalysatoren ganz besonders bevorzugt verwendet wird. Beispiele gut geeigneter Chrom(III)-Chelatkomplexe sind die Acetylacetonatokomplexe der allgemeinen Formel (II) 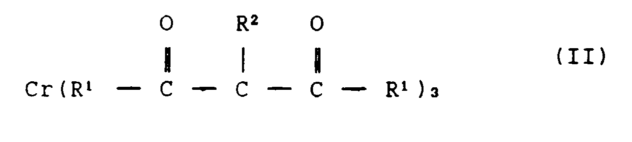 worin R¹ C₁- bis C₁₂-Alkyl und R² für Wasserstoff oder einen Rest R¹ steht. Ein Beispiel für einen besonders gut geeigneten Chrom(III)-acetylacetonato-Komplex ist Tris-acetylacetonato-chrom(III), welches ganz besonders vorteilhaft ist und für die Herstellung der Phillips-Katalysatoren ganz besonders bevorzugt verwendet wird.

Derartige Chrom(III)-Verbindungen können nach üblichen chemischen Synthesemethoden hergestellt werden, so daß sich nähere Erläuterungen hierüber erübrigen.

Im erfindungsgemäßen Phillips-Katalysator werden der Silicium-Aluminiumphosphatträger der allgemeinen Formel (I) und die Chrom(III)-Verbindung in üblichen Mengenverhältnissen verwendet. Vorzugsweise liegen der Silicium-Aluminiumphosphatträger einerseits und die Chrom(III)-Verbindung andererseits dabei in solchen Mengen im Katalysator vor, daß der fertige Phillips-Katalysator ein Atomverhältnis von Chrom:Phosphor von 0,1:1 bis 1:0,1, insbesondere von 0,5:1 bis 1:0,5 aufweist.

Unabhängig davon nach welcher Methode der Phillips-Katalysator hergestellt wird, werden die Mengen der erfindungsgemäß einzusetzenden Chrom(III)-Verbindungen und der Silicium-Aluminiumphosphatträger der allgemeinen Formel (I) vorzugsweise so gewählt, daß sich der fertige Phillips-Katalysator durch einen Chromgehalt von 0,1 bis 5,0 Gew-%, insbesondere von 0,5 bis 2,0 Gew.-%, und einen Phosphorgehalt von 0,1 bis 4,0 Gew.-%, insbesondere von 1,0 bis 2,0 Gew.-%, auszeichnet.

Die Herstellung des erfindungsgemäßen Phillips-Katalysators erfolgt üblicherweise nach einem mehrstufigen Verfahren, bei dem zunächst der Silicium-Aluminiumphosphatträger der allgemeinen Formel (I) mit einem Alkanol zu einer Suspension umgesetzt wird. Anschließend fügt man dieser Suspension eine Chrom(III)-Verbindung hinzu und entfernt das Lösungsmittel, d.h. das Alkanol. Im Anschluß daran aktiviert man den auf diese Weise erhaltenen Feststoff oxidativ.

Die Umsetzung des Silicium-Aluminiumphosphatträgers der allgemeinen Formel (I) mit dem Alkanol zu einer Suspension erfolgt üblicherweise bei Raumtemperatur durch 10 bis 60-minütiges Vermischen, gegebenenfalls in Anwesenheit von Inertgasen wie beispielsweise Stickstoff oder Argon. Als Alkanole finden insbesondere C₁-C₈-Alkanole Verwendung. Bevorzugt werden dabei Methanol, Ethanol oder n- und iso-Propanol eingesetzt.

Die auf diese Weise erhältliche Suspension wird anschließend mit der erfindungsgemäß zu verwendenden Chrom(III)-Verbindung vorzugsweise bei Temperaturen von 30 bis 100°C, insbesondere von 60 bis 90°C, 10 bis 60 Minuten lang umgesetzt und gerührt. Anschließend wird das Alkanol üblicherweise destillativ entfernt. Die auf diese Weise erhältliche Katalysatorvorstufe wird danach noch oxidativ aktiviert, wodurch letztlich der erfindungsgemäße Phillips-Katalysator entsteht.

Bei der Herstellung des erfindungsgemäßen Phillips-Katalysators wird die Katalysatorvorstufe bei höheren Temperaturen in einer oxidierenden Atmosphäre aktiviert, wodurch der feinteilige, mit Silicium-Aluminiumphosphat geträgerte Phillips-Katalysator entsteht. Methodisch gesehen weist dieser Aktivierungsschritt keine Besonderheiten auf, sondern kann in üblicher und bekannter Weise durch Erhitzen der Katalysatorvorstufe auf Temperaturen von 300 bis 900°C, vorzugsweise von 500 bis 750°C, erfolgen. Bekanntermaßen wird hierbei die Katalysatorvorstufe in einer oxidierenden Atmosphäre erhitzt. Beispiele geeigneter oxidierender Atmosphären sind reiner Sauerstoff, Sauerstoff-Edelgas-Gemische oder ein Luftstrom, von denen Luft aus Gründen der Wirtschaftlichkeit besonders bevorzugt verwendet wird. Im allgemeinen liegt die Aktivierungszeit bei 30 Minuten bis 24 Stunden, wobei die Dauer von 1 bis 10 Stunden von Vorteil ist.

Vor seiner Verwendung kann der Phillips-Katalysator noch durch Behandlung mit Ethylen und/oder α-Olefinen wie beispielsweise Propylen, But-1-en, Pent-1-en oder Hex-1-en, weiterhin durch Kohlenmonoxid, durch Trialkylborane, wie beispielsweise Triethylboran oder durch Trialkylaluminium, beispielsweise Triethylaluminium modifiziert werden. Darüber hinaus kann er noch einer Halogenierung, im speziellen einer Fluoridierung oder einer Silylierung unterworfen werden.

Der erfindungsgemäße Phillips-Katalysator eignet sich hervorragend für die Herstellung von Polymerisaten von α-Olefinen, insbesondere von Homo- und Copolymerisaten des Ethylen nach den Phillips-Verfahren. Hierbei kommen als Polymerisationsreaktoren die üblichen und bekannten Schleifenreaktoren, Autoklaven, Gasphasenreaktoren mit Rührer und Gasphasenwirbelschichtreaktoren in Betracht. Die Polymerisation kann dabei nicht nur in der Gasphase, sondern auch in Lösung, beispielsweise in einem inerten Kohlenwasserstoff wie iso-Butan oder in einer Suspension durchgeführt werden.

Beispiele für geeignete α-Olefine, welche mit Ethylen copolymerisiert werden können, sind Propylen, But-1-en, Pent-1-en, Hex-1-en und Oct-1-en sowie die konjugierten und nicht konjugierten Diolefine, Butadien, Penta-1,3-dien, 2,3-Dimethylbutadien, Penta-1,4-dien, Hexa-1,5-dien und Vinylcyclohexen. Im allgemeinen werden die Comonomere dem Ethylen in einer solchen Menge zugesetzt, daß Ethylencopolymerisate aus 96 bis 99,8 Gew.-% an einpolymerisiertem Ethylen und 0,2 bis 4 Gew.-% mindestens eines einpolymerisierten Comonomeren entstehen.

Die Polymerisation mit Hilfe des erfindungsgemäßen Phillips-Katalysators wird vorzugsweise bei Temperaturen von 70 bis 150°C und Drücken von 2 bis 150 bar durchgeführt. Bevorzugt sind dabei Temperaturen von 90 bis 110°C und Drücke von 20 bis 80 bar. Darüber hinaus kann auch in Anwesenheit von in der Polymerisationstechnik gebräuchlichen Reglern, beispielsweise in Anwesenheit von Wasserstoff, polymerisiert werden. Die Polymerisation kann sowohl kontinuierlich oder auch diskontinuierlich durchgeführt werden.

Mit Hilfe des erfindungsgemäßen Phillips-Katalysators erhält man Polymerisate von α-Olefinen, insbesondere Ethylenhomopolymerisate oder Copolymerisate des Ethylens mit untergeordneten Anteilen anderer α-Olefine, wie beispielsweise Propylen, But-1-en, Pent-1-en, Hex-1-en oder Oct-1-en.

Der erfindungsgemäße Phillips-Katalysator eignet sich vor allem auch zur Herstellung von hochmolekularem breitverteiltem HDPE. Durch Mitverwendung von reduzierenden Cokatalysatoren wie beispielsweise Triethylboran oder Triethylaluminium können auch niedermolekulare Polymere erhalten werden. Derartige Polyethylene weisen Dichten von 0,90 bis 0,97 g/cm³, insbesondere von 0,91 bis 0,96 g/cm³ auf.

Der erfindungsgemäße Phillips-Katalysator zeichnet sich gegenüber solchen Phillips-Katalysatorsystemen, die ebenfalls auf einem strukturell eindeutig definierten Träger fixiert sind insbesondere durch eine hohe Produktivität aus. Aufgrund der definierten Struktur seines Trägermaterials eignet sich der erfindungsgemäße Phillips-Katalysator vor allem auch zur Untersuchung von Struktur-Wirkungsmechanismen bei Polymerisations-Katalysatoren. Die dadurch erhaltenen Polymerisate von α-Olefinen lassen sich gut verarbeiten und können u.a. zur Herstellung von Folien und Formkörpern verwendet werden.

### Beispiel und Vergleichsversuch

### Beispiel

a) Herstellung eines Phillips-Katalysators
   In einem 1-1-Glaskolben wurden 100 g eines Silicium-Aluminiumphosphatträgers der Formel

   [ (Si_{0,13}Al_{0,50}P_{0,27})O₂ ]

   mit einem Porenvolumen von 0,6 cm³/g und einer äquivalenten spezifischen Oberfläche von 380 m²/g unter Stickstoff bei Raumtemperatur in 300 ml Methanol digeriert. Zu der dabei erhaltenen Suspension fügte man bei 50°C eine Lösung von 7,2 g Cr(NO₃)₃x9H₂O in 80 ml Methanol hinzu und rührte das dadurch erhaltene Gemisch 10 Minuten lang. Anschließend wurde das Methanol am Rotationsverdampfer abgezogen.
   Die auf diese Weise erhaltene Katalysatorvorstufe wurde danach im Luft-Strom in einem Wirbelschichtaktivator zwei Stunden lang bei 650°C aktiviert. Der daraus resultierende Phillips-Katalysator wies einen elementar-analytisch ermittelten Chromgehalt von 0,8 Gew.-% auf.
b) Polymerisation
   Ein 1-1-Druckautoklav wurde auf 95°C aufgeheizt, mehrmals mit Ethylen gespült und unter Rühren mit 500 ml iso-Butan gefüllt. Danach wurde Ethylen solange in den Autoklaven eingepreßt, bis dieser einen Gesamtdruck von 40 bar aufwies. Anschließend wurden 120 mg des unter a) hergestellten Phillips-Katalysators über eine Dosierlanze in den Autoklaven eingebracht und danach wurde insgesamt 90 Minuten lang polymerisiert. Entsprechend dem Verlauf der Polymerisation wurde dabei verbrauchtes Ethylen kontinuierlich nachgepreßt. Nach 90 Minuten wurde die Polymerisation durch Entspannen abgebrochen.
   Aus dem erfindungsgemäßen Beispiel wurden 130 g grießförmiges Polyethylen erhalten. Der Staudinger-Index Jg und die Dichte des entstandenen Polyethylens können ebenso wie die Produktivität des verwendeten Phillips-Katalysators der nachfolgenden Tabelle entnommen werden.

### Vergleichsversuch

a) Herstellung eines Phillips-Katalysators
Analog der im erfindungsgemäßen Beispiel a) beschriebenen Verfahrensweise wurde ein Phillips-Katalysator hergestellt, jedoch wurde anstelle des Silicium-Aluminiumphosphatträgers der Formel [(Si_{0,13}Al_{0,50}P_{0,27})O₂] ein Zeolith-Träger ZSM-5 analog der EP-A 075 421 verwendet, der u.a. 0,01 Gew.-% Na, 43,6 Gew.-% SiO₂ sowie Al₂O₃ enthielt.
b) Entsprechend dem erfindungsgemäßen Beispiel b) wurde Ethylen unter analogen Bedingungen polymerisiert und dabei der Phillips-Katalysator des gleichsversuches a) verwendet.
Dabei erhielt man 18 g eines grießförmigen Polyethylens. Der Staudinger-Index Jg und die Dichte des entstandenen Polyethylens können ebenso wie die Produktivität des verwendeten Phillips-Katalysators der nachfolgenden Tabelle entnommen werden.

**Tabelle**

| | Beispiel | Vergleichsbeispiel |
|---|---|---|
| Staudinger-Index Jg ^{a)} [cm³/g] | 810 | 610 |
| | | |
| Dichte ^{b)} [g/cm³] | 0,949 | 0,943 |
| | | |
| Produktivität g Polyethylen/g Phillips-Katalysator | 1100 | 150 |
| Aus dem Beispiel sowie dem Vergleichsversuch geht u.a. hervor, daß sich der erfindungsgemäße Phillips-Katalysator insbesondere durch eine deutlich erhöhte Produktivität auszeichnet. | | |

| | | |
|---|---|---|
| a) gemessen nach DIN 53 733 | | |
| b) gemessen nach DIN 53 479 A | | |

## Patentansprüche

1. Phillips-Katalysator zur Polymerisation von α-Olefinen, enthaltend als katalytisch wirksame Komponente mindestens eine Chrom(III)-Verbindung auf einem Silicium-Aluminiumphosphatträger der allgemeinen Formel (I),
(SiₓAl_{y}P_{z})O₂, (I)
wobei
x für Werte von 0,05 bis 0,5
y für Werte von 0,1 bis 1,0 und
z für Werte von 0,1 bis 1,0 steht.

2. Phillips-Katalysator nach Anspruch 1, wobei ein solcher Silicium-Aluminiumphosphatträger der allgemeinen Formel (I) verwendet wird, bei dem
x für Werte von 0,1 bis 0,2
y für Werte von 0,3 bis 0,5 und
z für Werte von 0,2 bis 0,6 steht.

3. Phillips-Katalysator nach den Ansprüchen 1 oder 2, wobei als Chrom(III)-Verbindungen wasserlösliche Salze des dreiwertigen Chroms oder Chrom(III)-Chelatkomplexe verwendet werden.

4. Verfahren zur Herstellung eines Phillips-Katalysators gemäß den Ansprüchen 1 bis 3, dadurch gekennzeichnet, daß man zunächst den Silicium-Aluminiumphosphatträger der allgemeinen Formel (I) mit einem Alkanol zu einer Suspension umsetzt, der Suspension anschließend die Chrom(III)-Verbindung hinzufügt, danach das Lösungsmittel entfernt und den dadurch erhaltenen Feststoff oxidativ aktiviert.

5. Verfahren nach Anspruch 4, dadurch gekennzeichnet, daß man die oxidative Aktivierung im Luftstrom bei Temperaturen von 300 bis 900°C durchführt.

6. Verfahren zur Herstellung von Polymerisaten von α-Olefinen mit Hilfe eines Phillips-Katalysators bei Temperaturen von 70 bis 150°C und Drücken von 2 bis 150 bar, dadurch gekennzeichnet, daß man hierbei Phillips-Katalysatoren gemäß einem der Ansprüche 1 bis 3 verwendet.

## Claims

1. A Phillips catalyst for the polymerization of α-olefins, containing, as a catalytically active component, at least one chromium(III) compound on a silicon aluminum phosphate carrier of the formula (I)
(SiₓAl_{y}P_{z})O₂ (I)
where x is from 0.05 to 0.5 and y and z are each from 0.1 to 1.0.

2. A Phillips catalyst as claimed in claim 1, wherein a silicon aluminum phosphate carrier of the formula (I), where x is from 0.1 to 0.2, y is from 0.3 to 0.5 and z is from 0.2 to 0.6, is used.

3. A Phillips catalyst as claimed in claim 1 or 2, wherein the chromium(III) compound used is a watersoluble salt of trivalent chromium or a chromium(III) chelate complex.

4. A process for the preparation of a Phillips catalyst as claimed in any of claims 1 to 3, wherein the silicon aluminum phosphate carrier of the formula (I) is first converted into a suspension with an alkanol, the chromium(III) compound is then added to the suspension, the solvent is then removed and the solid thus obtained is activated by oxidation.

5. A process as claimed in claim 4, wherein the oxidative activation is carried out in an air stream at from 300 to 900°C.

6. A process for the preparation of a polymer of α-olefins with the aid of a Phillips catalyst at from 70 to 150°C and from 2 to 150 bar, wherein a Phillips catalyst as claimed in any of claims 1 to 3 is used for this purpose.

## Revendications

1. Catalyseur Phillips pour la polymérisation d'α-oléfines, qui contiennent, à titre de composants catalytiquement actifs, au moins un composé du chrome(III) sur un support à base de phosphate de silicium-aluminium de la formule général (I),
(SiₓAl_{y}P_{z})O₂, (I)
dans laquelle
x a des valeurs qui varient de 0,05 à 0,5
y a des valeurs qui varient de 0,1 à 1,0 et
z a des valeurs qui varient de 0,1 à 1,0.

2. Catalyseur Phillips suivant la revendication 1, caractérisé en ce que l'on utilise un support en phosphate de silicium-aluminium de la formule générale (I, dans laquelle
x a des valeurs qui varient de 0,1 à 0,2,
y a des valeurs qui varient de 0,3 à 0,5 et
z a des valeurs qui varient de 0,2 à 0,6.

3. Catalyseur Phillips suivant la revendication 1 ou la revendication 2, caractérisé en ce que l'on utilise, à titre de composés du chrome(III), des sels solubles dans l'eau du chrome trivalent ou des complexes à base de chélate de chrome(III).

4. Procédé de préparation d'un catalyseur Phillips suivant l'une quelconque des revendications 1 à 3, caractérisé en ce que l'on convertit d'abord le support de phosphate de silicium et d'aluminium de la formule générale (I), en une suspension à l'aide d'un alcanol, on ajoute ensuite le composé du chrome(III) à la suspension, puis on élimine le solvant et on active le solide ainsi obtenu par voie oxydante.

5. Procédé suivant la revendication 4, caractérisé en ce que l'on entreprend l'activation par voie oxydante, à des températures de 300 à 990°C, dans un courant d'air.

6. Procédé de préparation de polymères d'α-oléfines, à l'aide d'un catalyseur Phillips, à des températures de 70 à 150°C et sous des pressions de 2 à 150 bars, caractérisé en ce que l'on utilise à cette fin, des catalyseurs Phillips suivant l'une quelconque des revendications 1 à 3.
